# EUROPÄISCHE PATENTANMELDUNG

(11) **EP 2 316 683 A1**
(43) Veröffentlichungstag der Anmeldung: **04.05.2011**
(21) Anmeldenummer: 10405208.9
(22) Anmeldetag: 02.11.2010
(51) Int. Cl.: B60K 6/52, B60K 6/46, B60W 10/06, B60W 10/18, B60W 10/08, B60W 20/00, B60W 10/20

(54) **Einheit zum Ausrüsten eines Fahrzeuges mit Verbrennungsmotor zu einem Fahrzeug mit Hybridantrieb**

(30) Priorität: 03.11.2009 CH 16952009
(71) Anmelder: Bolliger, Martin, 3303 Zuzwil (CH)
(72) Erfinder: Moser, Walter, Parque la Huerta San Fernando (CL); Krasniqi, Adrian, 6015 Luzern (CH); Aubry, Morgan, 2503 Biel (CH); Dawodi, Benar, 6596 Gordola (CH)
(74) Vertreter: Frei Patent Attorneys

(57) **Zusammenfassung**

Eine Einheit (1) zum Ausrüsten eines Fahrzeuges mit einem auf eine erste Antriebsachse wirkenden Verbrennungsmotor zu einem Fahrzeug mit Hybridantrieb, weist die folgenden Komponenten auf:
• mindestens einen Traktions-Elektromotor (13), welcher dazu vorgesehen ist, auf eine zweite Antriebsachse des Fahrzeuges zu wirken,
• eine Speichereinheit (11) zum Speichern elektrischer Energie und zum Speisen des Traktions-Elektromotors (13), und
• eine Hybridsteuereinheit (10), welche dazu eingerichtet ist, den Traktions ―Elektromotor (13) anzusteuern und ferner dazu vorgesehen ist, in Steuerverbindungen (2) zwischen Bedienelementen (9) und Fahrzeugsteuerung (3) eines Fahrzeuges geschaltet zu werden.

## Beschreibung

Die Erfindung bezieht sich auf das Gebiet der Fahrzeugtechnik und insbesondere auf eine Einheit zum Ausrüsten eines Fahrzeuges mit Verbrennungsmotor zu einem Fahrzeug mit Hybridantrieb gemäss dem Oberbegriff der entsprechenden unabhängigen Patentansprüche.

### STAND DER TECHNIK

Es ist bekannt, Fahrzeuge mit seriell oder parallel arbeitenden Verbrennungs- und Elektromotoren anzutreiben. Solche Hybridantriebe sind teuer, unter anderem, weil die Umrüstung bestehender Modelle aufwendig ist. Nebst dem Aufwand für die mechanische Integration ist auch eine steuerungstechnische Integration erforderlich.

### DARSTELLUNG DER ERFINDUNG

Es ist deshalb Aufgabe der Erfindung, eine Einheit zum Ausrüsten eines Fahrzeuges mit Verbrennungsmotor zu einem Fahrzeug mit Hybridantrieb zu schaffen, welche möglichst geringe Modifikationen auf der maschinenbautechnischen Seite wie auch auf der Seit der Steuerungstechnik erfordert.

Diese Aufgabe löst eine Einheit zum Ausrüsten eines Fahrzeuges mit Verbrennungsmotor zu einem Fahrzeug mit Hybridantrieb mit den Merkmalen des Patentanspruches 1.

Dabei wird davon ausgegangen, dass der konventionelle Teil des Fahrzeuges die folgenden Komponenten aufweist:
- Einen Verbrennungsmotor.
- Ein automatisches Schaltgetriebe zur Übertragung der Antriebskraft des Verbrennungsmotors auf eine erste Antriebsachse. Bei einem solchen Schaltgetriebe wird die Steuerung der Kupplung und der Wechsel des Ganges nicht direkt durch den Fahrer, sondern durch Stellmotoren oder Hydraulik und eine entsprechende Getriebesteuerung zur Ansteuerung der Stellmotoren respektive der Hydraulik bewirkt.
- Eine Fahrzeugsteuerung, welche wiederum eine Motorsteuerung und die Getriebesteuerung aufweist.
   o Die Motorsteuerung regelt die Zündung und Kraftstoffversorgung des Verbrennungsmotors und beispielsweise auch ein ABS (Antiblockiersystem).
   o Die Getriebesteuerung steuert die Aktoren zur Betätigung der Kupplung und der Gangwahl des Schaltgetriebes.
- Bedienelemente der Fahrzeugsteuerung, also durch den Fahrer betätigte Elemente. Dies sind hauptsächlich
   o Zündschlüssel
   o Gaspedal
   o Gangwahlschalter
   o Schaltauslösetaster
   o Bremspedal

Die Signale der Bedienelemente werden über Steuerverbindungen an die Fahrzeugsteuerung übermittelt und durch die Fahrzeugsteuerung in der Getriebesteuerung und in der Motorsteuerung verarbeitet.

Der Hybrid-Teil des Fahrzeuges, entsprechend der Umrüsteinheit, weist auf:
- mindestens einen Antriebs-Elektromotor, welcher dazu vorgesehen ist, auf eine zweite Antriebsachse des Fahrzeuges zu wirken;
- mindestens eine Motorsteuereinheit, welche den oder die Antriebs-Elektromotoren betreibt;
- mindestens eine Speichereinheit (z.B. auch Traktions-Energiespeicher oder Traktions-Batterie genannt) zum Speichern von Energie und zum Speisen des Antriebs-Elektromotors; und
- mindestens eine Hybridsteuereinheit, welche dazu eingerichtet ist, den oder die Motorensteuerungseinheiten der Traktions-Elektromotoren anzusteuern und ferner dazu vorgesehen ist, in Steuerverbindungen zwischen Bedienelemente und Fahrzeugsteuerung eines Fahrzeuges geschaltet zu werden.

Erfindungsgemäss werden also die Signale der Bedienelemente der Fahrzeugsteuerung nicht mehr direkt zugeführt, sondern über die Hybridsteuerung und werden durch die Hybridsteuerung modifiziert. Dadurch ist keine Modifikation der Fahrzeugsteuerung erforderlich, was den Umrüstaufwand stark verringert.

Weitere Vorteile sind, dass die einzelnen Elemente modular zusammengestellt werden und Fahrzeuge verschiedener Leistungsklassen mit der gleichen Hybridsteuerungseinheit betrieben werden können. Auch können unterschiedliche Motortypen und Energiespeichersysteme eingesetzt werden.

Indem der Traktions-Elektromotor auf eine andere Achse als der Verbrennungsmotor wirkt, addieren sich, falls beide Motoren in Betrieb sind, ihre Drehmomente. Je nach gewählter Betriebsart der Hybridsteuerung wird eine geforderte Leistung (respektive ein Drehmoment) entsprechend der Gaspedalstellung an einen oder die beiden Motoren weitergegeben.

Dank der Automatik des automatischen Schaltgetriebes passt sich, bei Bedarf, der Verbrennungsmotor der Topographie und der vom Traktions-Elektromotor abgegeben Leistung automatisch an. Es sind keine weiteren technischen Koordinationsmassnahmen erforderlich, um die Momentenaufteilung respektive Leistungsaufteilung zu steuern.

Vorzugsweise werden auch keine Bussignale eines Fahrzeugbusses (beispielsweise CAN-Bus) zur Erfassung von Signalen der Steuerverbindungen verwendet. Stattdessen werden reine Analogsignale, wie sie an Anschlüssen oder Anschlussteckern der Bedienelemente vorliegen, durch die Hybridsteuerung erfasst respektive abgefangen. Dem entsprechend gibt die Hybridsteuerung auch der Fahrzeugsteuerung Analogsignale entsprechend den abgefangenen Signalen ab.

Nebst den oben genannten Bedienelemente der Fahrzeugsteuerung liegen in der Regel weitere Bedienelemente vor, beispielsweise Schalter zum Einschalten oder Steuern von elektrischen Verbrauchern wie beispielsweise Heizung, Defroster, etc. Diese können optional in der Hybridsteuerung berücksichtigt und verarbeitet werden.

Beispielsweise geschieht dies in folgender Weise: Wenn die Kühlwassertemperatur einen bestimmten Wert unterschreitet und der Verbrennungsmotor nicht in Betrieb ist, steuert die Hybridsteuerung ein zusätzliches Heizsystem an, welches bei Bedarf Wärme abgibt.

Nebst fahrzeugseitig erfassten Grössen, welche in der Fahrzeugsteuerung verarbeitet werden und für die Hybridsteuerung nicht direkt von Belang sind, können weitere fahrzeugseitige Grössen in der Hybridsteuerung verarbeitet werden: Solche fahrzeugseitig erfasste Grössen sind hauptsächlich
- Informationen zum Energiespeicher und zum Energiemanagementsystem wie zum Beispiel Batteriekapazität (aktuell in der Batterie gespeicherte Energiemenge) der Fahrzeugbatterie sowie einer Traktionsbatterie, oder Wasserstoffdruck, Temperatur oder Störungen
- Informationen zum Motor und der Motorsteuerung wie zum Beispiel Drehzahl oder Temperatur

Die Batteriekapazität wird beispielsweise durch ein Batteriemanagementsystem ermittelt welches autonom auf der Batterie sitzt und die Informationen an die Hybridsteuerung meldet. Dies kann digital oder analog oder über einen CAN-Bus oder ähnliche Protokolle geschehen. Alternativ zu Batterien sind auch Brennstoffzellen mit z.B. Wasserstoff denkbar.

Dazu hat die Hybridsteuerung vorzugsweise Zugriff auf die folgenden Steuersignale:
- Drehmomentsteuerung des Elektromotors
- Drehmomentsteuerung des Verbrennungsmotors
- Energierückgewinnung des Elektromotors

Die Hybridsteuerung steuert respektive regelt den Traktions-Elektromotor vorzugsweise mit einer Drehmomentregelung. Dazu liegt beispielsweise ein leistungselektronischer Teil vor, welcher den Traktions-Elektromotor aus dem Traktions-Energiespeicher speist, und gegebenenfalls auch elektrische Energie zurück in die Traktions-Batterie speist. Der Traktionsanteil des Traktions-Elektromotors ist dabei, entsprechend der Gaspedalstellung und der Aufteilung gemäss der aktuellen Betriebsart, als Drehmoment oder als eine äquivalente Grösse vorgegeben.

Zusätzlich misst und/oder modelliert und überwacht die Hybridsteuerung oder ein separates Batteriemanagementsystem vorzugsweise auch Spannung, Kapazität und Zustand der Traktionsbatterie.

Anhand von Informationen über den Zustand der Traktionsbatterie oder allgemein des Traktions-Energiespeichers regelt die Hybridsteuerung den Motor, beispielsweise entsprechend dem Ladezustand der Energiespeicher. Beispielsweise wird, wenn der Ladezustand einen vorgegebenen Wert unterschreitet, mit der Leistung zurückgefahren, sodass ein grösserer Anteil des Antriebs auf den Verbrennungsmotor entfällt.

Da die Hybridsteuerung die Steuerung des Verbrennungsmotors kontrolliert, aber dabei das Fahrzeug in einem anderen Zustand ist, als der Verbrennungsmotor respektive seine Steuerung erwartet, muss die Hybridsteuerung der Fahrzeugsteuerung einen passenden Zustand "vortäuschen", um bestimmte Automatismen der Fahrzeugsteuerung zu verhindern.

Beispielsweise ist die Fahrzeugsteuerung darauf ausgelegt, dass der Verbrennungsmotor nur gestartet werden kann, wenn die Bremse betätigt ist. Daher ist ein entsprechendes Bremspedalsignal, welches die Betätigung der Bremse anzeigt, durch die Hybridsteuerung abgefangen. Soll während der Fahrt, bei elektrischer Traktion, der Verbrennungsmotor gestartet werden, so übermittelt die Hybridsteuerung der Motorsteuerung das geforderte Bremspedalsignal (unterdrückt aber das Aufleuchten der Bremslichter), schaltet über die Getriebesteuerung das Getriebe in Neutralstellung, und gibt der Motorsteuerung ein Zündsignal.

Die Fahrzeugsteuerung ist ferner darauf ausgelegt, dass eine Lenkhilfe (Servolenkung) ausgeschaltet ist, wenn der Motor ausgeschaltet ist. Dem entsprechend ist die Hybridsteuerung so ausgelegt, dass sie ein Signal, welches einer Steuerung der Lenkhilfe übermittelt, ob der Motor eingeschaltet ist, abfängt und auch bei elektrischer Traktion so die Lenkhilfe eingeschaltet lässt.

Die Hybridsteuerung kontrolliert den Anlasser des Verbrennungsmotors. Dieser wird immer dann betätigt, wenn der Verbrennungsmotor nicht läuft und gleichzeitig über das Gaspedal von ihm Drehmoment oder Leistung verlangt wird. Der Verbrennungsmotor wird also mit dem Gaspedal gestartet. Damit kann umgangen werden, dass die Zündfunktion des Schlüssels bis zum nächsten Systemstart gesperrt wird, nachdem sie einmal betäigt worden ist.

In einer bevorzugten Ausführungsform der Erfindung weist der Traktions-Energiespeicher, insbesondere eine Batterie, eine Kapazität von beispielsweise rund 4.5 kWh auf. Damit wird bei beispielsweise einem Fiat Panda eine Reichweite bei rein elektrischer Traktion von rund 30 km ermöglicht. Dies ist für viele Einsätze ausreichend. Damit ist es auch möglich, relativ kleine Traktions-Energiespeicher einzusetzen, und diese beispielsweise in der Reserveradmulde zu platzieren. Der Traktions-Energiespeicher weist vorzugsweise also im Wesentlichen dasselbe Volumen wie ein Reserverad auf. Vorzugsweise ist der Energiespeicher in seinen äusseren Konturen auch wie ein Reserverad geformt. In solchen Fällen beträgt das Gewicht der Traktions-Energiespeicher rund 50 kg.

In einer bevorzugten Ausführungsform der Erfindung wird die Umrüsteinheit in einem Fiat Panda eingesetzt, oder in einem anderen Fahrzeug, welches die gleiche Bodengruppe verwendet, beispielsweise einem Fiat 500 oder Ford Ka.

Zum Ausrüsten eines Fahrzeuges mit Verbrennungsmotor mittels einer Umrüsteinheit werden also die folgenden Schritte ausgeführt:
- Verbinden von Steuerverbindungen von Bedienelementen mit der Hybridsteuerung der Umrüsteinheit,
- Verbinden von weiteren Steuerverbindungen von der Hybridsteuerung mit der Fahrzeugsteuerung,
- wobei Signale der weiteren Steuerverbindungen von der Fahrzeugsteuerung gleich verarbeitet werden wie Signale der Steuerverbindungen.

Vorzugsweise wird dabei die Fahrzeugsteuerung nicht modifiziert, insbesondere nicht, was die Verarbeitung der antriebsbezogenen Steuersignale und der Sicherheitssignale betrifft.

Vorzugsweise verwendet die Erfindung ein elektrisches Signal, welches eine Stellung des Gaspedales wiedergibt. Entsprechend dieses Signales wird die Leistungsaufteilung zwischen Verbrennungsmotor und Traktions-Elektromotor durch eine analoge oder digitale Verarbeitung bewirkt. In einer alternativen Ausführungsform der Erfindung geschieht dies mit mechanischen Mitteln:
Zwei Gaspedale werden beispielsweise entweder vertikal übereinander angeordnet. Eines steuert den Elektromotor, das zweite den Benzinmotor. Eine Widerstandsfeder des Gaspedals für den elektrischen Antrieb ist weicher als jene des Pedals für den Benzinmotor. Somit wird zuerst der Elektromotor angesteuert und sobald dieser den maximalen Input erhält, empfängt der Benzinmotor das Signal des nun bewegten zweiten Gaspedals.

Oder: zwei Gaspedale werden horizontal nebeneinander angeordnet. Eines steuert den Elektromotor, das zweite den Benzinmotor. Beide Pedale werden gemeinsam betätigt und steuern die beiden Motoren parallel an.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: die Komponenten eines Fahrzeuges mit Hybridantrieb;
- Figur 2: den funktionalen Zusammenhang zwischen den Komponenten;
- Figur 3: verschiedene Zustände des Hybridantriebs;
- Figur 4: verschiedene Möglichkeiten der Drehmomentaufteilung; und
- Figur 5: eine Schaltung zur Batterieüberwachung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

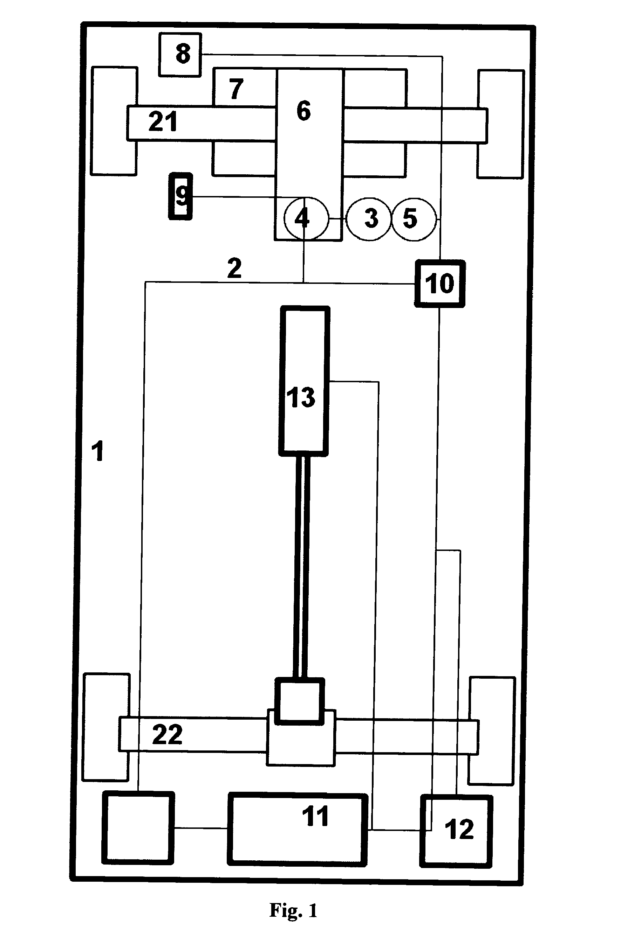

**Figur 1** zeigt die Komponenten eines Fahrzeuges mit Hybridantrieb. Ein Fahrzeug, typischerweise ein Automobil, weist einen Verbrennungsmotor 7 auf, der über ein Getriebe 6 auf eine erste Achse (beispielsweise die Vorderachse) 21 mit Rädern respektive Vorderrädern 23 wirkt. Motor und Getriebe werden nach Massgabe von Bedienelementen 9 wie Gaspedal, Gangwahlschalter etc. angesteuert. Ein Traktions-Elektromotor 13 wirkt auf eine zweite Achse (beispielsweise die Hinterachse) 22 mit Rädern respektive Hinterrädern 24. Der Traktions-Elektromotor 13 wird über einen elektronischen Leistungsteil 12 durch eine Traktions-Batterie 11 gespeist. der Leistungsteil 12 ist durch eine Hybridsteuerung 10 angesteuert. Die Hybridsteuerung 10 ist zwischen die Bedienelemente 9 und einer Fahrzeugsteuerung 3 geschaltet. Sie fängt die Signale der Bedienelemente 9 ab und gibt sie in modifizierter Form an die Fahrzeugsteuerung 3 weiter.

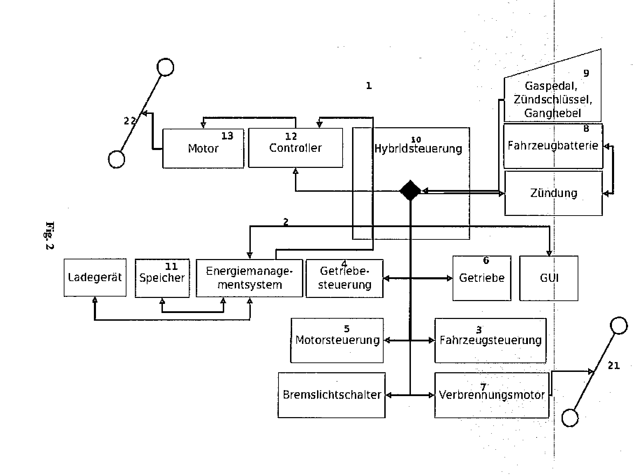

**Figur 2** zeigt den funktionalen Zusammenhang zwischen den Komponenten. Nebst den bereits erwähnten Komponenten sind hier noch Steuerverbindungen 2 zwischen Bedienelementen 9 und Fahrzeugsteuerung 3, unterbrochen durch die Hybridsteuerung 10 und weitergeführt als weitere Steuerverbindungen 2', gezeigt. Die Fahrzeugsteuerung 3 ist aufgeteilt in eine Getriebesteuerung 4 zur Ansteuerung des Getriebes 6 und eine Motorsteuerung 5 zur Ansteuerung des Verbrennungsmotors 7. Einzelne weitere Sensoren und Aktoren, welche für den Betrieb der Getriebesteuerung 4 und der Motorsteuerung 5 erforderlich sind, sind nicht eingezeichnet. Eine Fahrzeugbatterie 8 versorgt die Fahrzeugsteuerung 3 und weitere Verbraucher mit elektrischer Energie, mit Ausnahme des Traktions-Elektromotors 13.

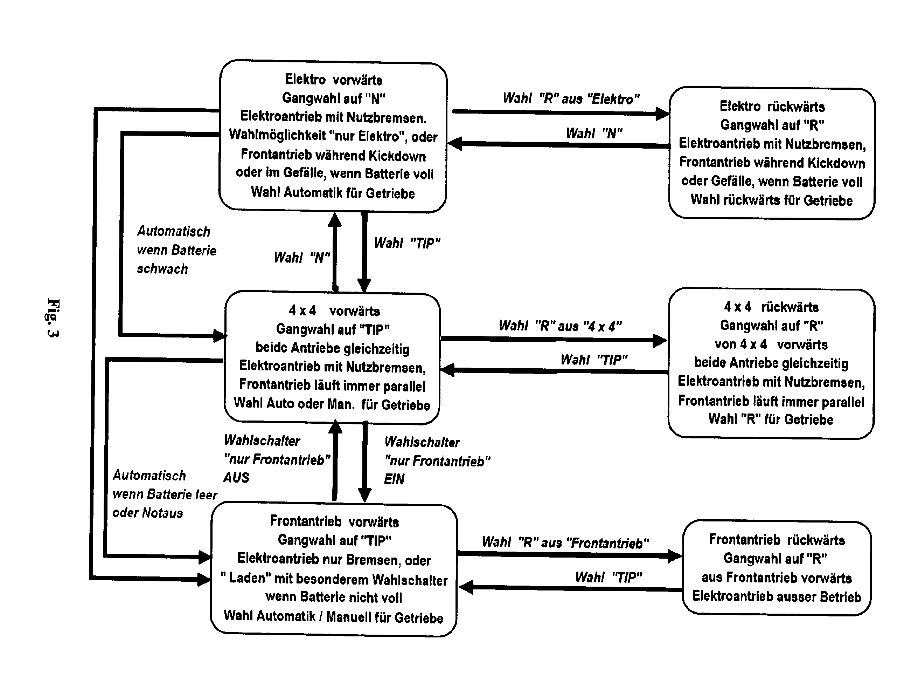

**Figur 3** zeigt verschiedene Zustände des Hybridantriebs.

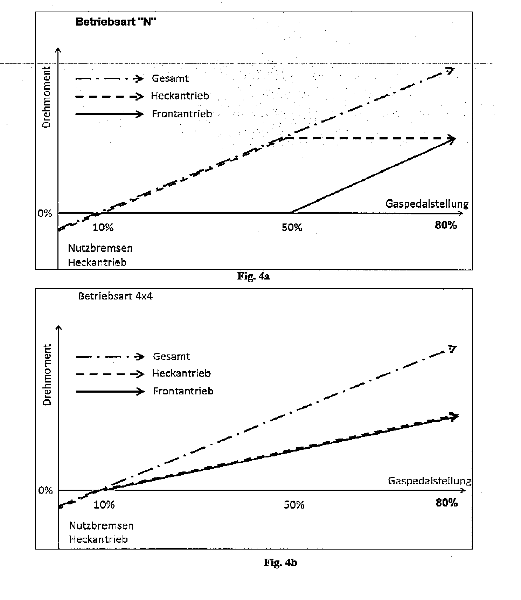

**Figur 4a-4c** zeigt verschiedene Möglichkeiten der Drehmomentaufteilung entsprechend den Zuständen der Figur 3.

In einer **ersten** Betriebsart "N" gemäss **Figur 4a** ist prioritär der Traktions-Elektromotor (beispielhaft an der Heck- oder Hinterachse) 13 in Betrieb.
**N:** Im Modus "N" wird das Gaspedalsignal prioritär an den Elektroantrieb weitergegeben. Wenn dieser sein maximales Drehmoment abgibt und das Gaspedal weiter nach unten gedrückt wird, startet der Verbrennungsmotor und addiert sein Drehmoment zum elektrischen hinzu.

In einer **zweiten** Betriebsart "4x4" gemäss **Figur 4b** sind der Verbrennungsmotor 7 (beispielhaft an der Front- oder Vorderachse) und der Elektromotor 13 zu gleichen Teilen in Betrieb.
**4x4:** Im Modus "4x4" wird das Gaspedalsignal von der Y-Box zu gleichen Teilen an beide Antriebe weiter gegeben. Es steht zur freien Wahl, ob das Getriebe manuell oder automatisch geschaltet wird. Das Getriebe kann also entweder im automatischen Modus betrieben werden oder im manuellen Modus. Entsprechend schaltet der Gang automatisch oder indem FahrerIn den Ganghebel betätigt (z.B.Tiptronic)

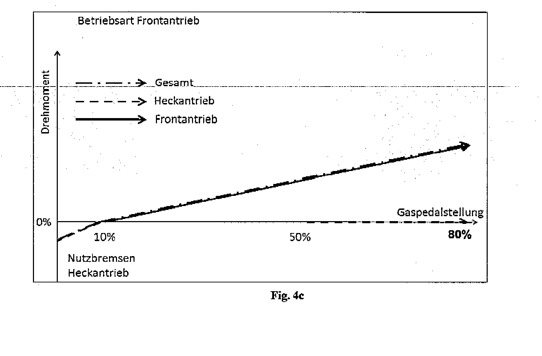

In einer **dritten** Betriebsart "Frontantrieb" gemäss **Figur 4c** ist ausschliesslich der Verbrennungsmotor 7 (beispielhaft an der Front- oder Vorderachse) in Betrieb.
**Frontantrieb:** Im Modus "Frontantrieb" werden alle Steuersignale direkt durch die Hybridsteuerung durchgeschlauft und unverändert an den Verbrennungsmotor weitergegeben. In diesem Zustand ist der elektrische Antrieb ausgeschaltet

Falls während der Fahrt mit elektrischer Traktion der Verbrennungsmotor 7 einzuschalten ist, so wird der Entscheid zum Einschalten beispielsweise in folgender Weise gefällt: Wenn der Elektromotor seine volle Leistung gibt, und das Gaspedal mehr Leistung verlangt, wird der Verbrennungsmotor gestartet

Zum Einschalten respektive Starten des Verbrennungsmotors 7 übermittelt die Hybridsteuerung 10 der Fahrzeugsteuerung 3 die folgenden Signale
1. Gang auf N
2. Bremspedal drücken (d.h. die Hybridsteuerung 10 übermittelt der Fahrzeugsteuerung 3 das Signal, welches den Anschein erweckt, das Bremspedal sei gedrückt)
3. Motor starten
4. Gang auf Tip
5. Gang auf Automatik

In der zweiten Betriebsart gemäss Figur 4b sind sowohl der Verbrennungsmotor 7 als auch der Traktions-Elektromotor 13 in Betrieb. Diese Betriebsart ist von Vorteil bei voraussichtlich langen Fahrten, oder falls Vierradantrieb erforderlich ist. Der Verbrennungsmotor wird wesentlich weniger Energie verbrauchen als ohne die elektrische Unterstützung. Sobald nicht mehr genügend elektrische Energie vorhanden ist, wird automatisch auf "Frontantrieb" gewechselt und der Elektromotor ausgeschaltet.

In der **dritten** Betriebsart gemäss **Figur 4c** ist nur der Verbrennungsmotor 7 in Betrieb. Der Traktions-Elektromotor 13 wird insbesondere beim Bremsen zum Laden der Traktions-Batterie 11 und optional auch der Fahrzeugbatterie verwendet. Die Betriebsart wird verwendet, wenn keine elektrische Energie zur Verfügung steht oder die elektrische Energie gespart werden soll, z.B. weil später in einer Umweltzone nur elektrisch gefahren werden darf.

Das Umschalten zwischen den Betriebsarten geschieht in einer bevorzugten Ausführungsform der Erfindung unter anderem mit einem Vorwahlschalter und/oder mit einem Schaltauslösetaster ("Tip"-Taster). Damit wird dem Schaltauslösetaster, welcher beim Hybridantrieb nicht erforderlich ist, eine neue Funktion im Zusammenhang mit dem Hybridantrieb gegeben.

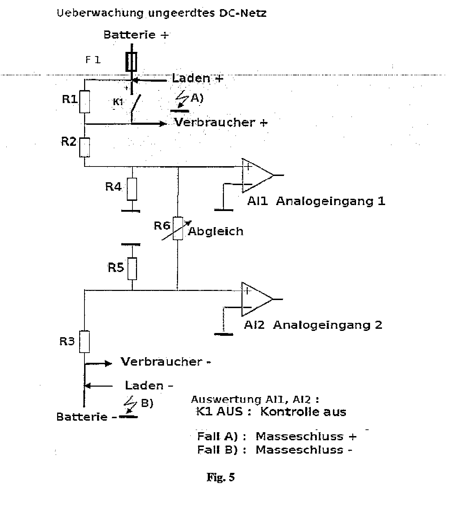

**Figur 5** zeigt eine Schaltung zur Batterieüberwachung. Vom Pluspol der Batterie, welcher eine positive Versorgungsleitung des elektrischen Systems speist, führt ein erster Widerstand R1 parallel zu einem Batterieschütz K1 auf einen ersten Spannungsteiler R2/R4 gegen Masse. Der Mittelabgriff des ersten Spannungsteilers führt auf einen positiven Eingang eines ersten Verstärkers mit Ausgang A11, dessen negativer Eingang auf Masse liegt. Vom Minuspol der Batterie, welcher eine negativen Versorgungsleitung, führt ein zweiter Spannungsteiler R3/R5 gegen Masse. Der Mittelabgriff des zweiten Spannungsteilers führt auf einen positiven Eingang eines zweiten Verstärkers mit Ausgang A12, dessen negativer Eingang auf Masse liegt. Zwischen den positiven Eingängen der beiden Verstärker ist ein verstellbarer Abgleichwiderstand R6 geschaltet.

Anhand der Spannungen an den Mittelabgriffen der Spannungsteiler, respektive anhand der Ausgangsspannungen der beiden Verstärker, lässt sich einerseits bestimmen, ob der Batterieschütz offen oder geschlossen ist, und ob ein Erdschluss an der positiven oder an der negativen Versorgungsleitung vorliegt. Dazu wird der Abgleichwiderstand R6 in einer Referenzphase eingestellt, so dass bei geschlossenem, d.h. leitendem Batterieschütz die Ausgangsspannungen der beiden Verstärker betragsmässig gleich sind (der erste Verstärker liefert eine positive, der zweite Verstärker eine negative Spannung gleichen Betrages).
- Bei einem Masseschluss an einer der Versorgungsleitungen fällt der Ausgang des entsprechenden Verstärkers auf Null, der andere verschiebt sich.
- Bei Öffnung des Batterieschützes K1 verschieben sich beide Verstärkerausgangsspannungen, werden aber nicht null.

Durch eine softwaremässige Analyse der Verstärkerausgangsspannungen ist eine solche Fallunterscheidung durchführbar. Alternativ ist auch eine rein analoge Auswertung denkbar.

### BEZUGSZEICHENLISTE

- 1: Umrüsteinheit
- 2: Steuerverbindungen
- 3: Fahrzeugsteuerung
- 4: Getriebesteuerung
- 5: Motorsteuerung
- 6: Getriebe
- 7: Motor
- 8: Fahrzeugbatterie
- 9: Bedienelemente
- 10: Hybridsteuerung
- 11: Traktions-Batterie
- 12: Leistungsteil
- 13: Traktions-Elektromotor
- 21: Vorderachse
- 22: Hinterachse

## Patentansprüche

1. Einheit (1) zum Ausrüsten eines Fahrzeuges mit einem auf eine erste Antriebsachse wirkenden Verbrennungsmotor zu einem Fahrzeug mit Hybridantrieb, **dadurch gekennzeichnet, dass** die Umrüsteinheit (1) aufweist:
• mindestens einen Traktions-Elektromotor (13), welcher dazu vorgesehen ist, auf eine zweite Antriebsachse des Fahrzeuges zu wirken,
• eine Speichereinheit (11) zum Speichern elektrischer Energie und zum Speisen des Traktions-Elektromotors (13), und
• eine Hybridsteuereinheit (10), welche dazu eingerichtet ist, den Traktions ―Elektromotor (13) anzusteuern und ferner dazu vorgesehen ist, in Steuerverbindungen (2) zwischen Bedienelementen (9) und Fahrzeugsteuerung (3) eines Fahrzeuges geschaltet zu werden.

2. Einheit (1) gemäss Anspruch 1, wobei die Hybridsteuerung (10) dazu vorgesehen ist, mindestens in die folgenden Steuerverbindungen (2) geschaltet zu werden: Zündschlüssel, Gaspedal, Gangwahlschalter eines Automatikgetriebes, Bremslichtschalter.

3. Einheit (1) gemäss Anspruch 1 oder 2, wobei die Hybridsteuerung (10) keine Bussignale eines Fahrzeugbusses zur Erfassung von Signalen der Steuerverbindungen (2) verwendet.

4. Einheit (1) gemäss einem der bisherigen Ansprüche, wobei die Hybridsteuerung (10) dazu vorgesehen ist, bei ausgeschaltetem Motor der Motorsteuerung (5) ein Steuersignal zu liefern, welches bei der unmodifizierten Steuerung der Motorsteuerung (5) signalisiert, ob die Bremse gedrückt ist, und damit die Hybridsteuerung (10) zum Starten des Verbrennungsmotors (7) der Motorsteuerung (5) vortäuscht, die Bremse sei gedrückt.

5. Einheit (1) gemäss einem der bisherigen Ansprüche, wobei die Hybridsteuerung (10) dazu vorgesehen ist, bei ausgeschaltetem Verbrennungsmotor (7) einer Lenkhilfesteuerung ein Steuersignal zu liefern, welche ein Ausschalten der Lenkhilfesteuerung verhindert.

6. Einheit (1) gemäss einem der bisherigen Ansprüche, wobei die Hybridsteuerung (10) dazu eingerichtet ist, gemäss einer Stellung des Gaspedals und in Abhängigkeit von einer vorgegebenen Betriebsart ein Sollsignal zum Ansteuern des Verbrennungsmotors (7) und ein Sollsignal zum Ansteuern des Traktions-Elektromotors (13) zu erzeugen und diese Sollsignale der Motorsteuerung (5) respektive dem Traktions-Elektromotor (13) vorzugeben.

7. Einheit (1) gemäss einem der bisherigen Ansprüche, wobei die Hybridsteuerung (10) eine erste Betriebsart aufweist, in welcher prioritär der Traktions-Elektromotor (13) in Betrieb ist und das Fahrzeug antreibt, eine zweite Betriebsart, in welcher sowohl der Traktions-Elektromotor (13) als auch der Verbrennungsmotor (7) jeweils einen vorgegebenen Anteil an Antriebskraft abgeben, und eine dritte Betriebsart, in welcher nur der Verbrennungsmotor (7) in Betrieb ist.

8. Einheit (1) gemäss einem der bisherigen Ansprüche, wobei die Hybridsteuerung (10) eine Drehmomentenregelung des Traktions-Elektromotors (13) realisiert.

9. Fahrzeug mit Hybridantrieb, umgerüstet mit einer Einheit (1) gemäss einem der vorangehenden Ansprüche.

10. Verfahren zum Ausrüsten eines Fahrzeuges mit Verbrennungsmotor mittels einer Einheit (1) gemäss einem der Ansprüche 1-8, **dadurch gekennzeichnet, dass** in dem Verfahren die folgenden Schritte ausgeführt werden:
o Verbinden von Steuerverbindungen (2) von Bedienelementen (9) mit der Hybridsteuerung (10) der Umrüsteinheit (1),
o Verbinden von weiteren Steuerverbindungen (2') von der Hybridsteuerung (10) mit der Fahrzeugsteuerung (3),
o wobei Signale der weiteren Steuerverbindungen (2') von der Fahrzeugsteuerung (3) gleich verarbeitet werden wie Signale der Steuerverbindungen (2).
